# EUROPÄISCHE PATENTSCHRIFT

(11) **EP 4 337 411 B1**
(45) Veröffentlichungstag und Bekanntmachung des Hinweises auf die Patenterteilung: **18.06.2025**
(21) Anmeldenummer: 22727824.9
(22) Anmeldetag: 04.05.2022
(51) Int. Cl.: B25B 27/00, B23K 11/30, B23B 31/12, B23B 31/16

(54) **EINRICHTUNG ZUM ABZIEHEN DER ELEKTRODENKAPPEN VON ELEKTRODENSCHÄFTEN**
SYSTEM FOR DRAWING OFF THE ELECTRODE CAPS FROM ELECTRODE ADAPTERS
SYSTÈME POUR RETIRER LES CAPUCHONS D'ÉLECTRODE D'ADAPTATEURS D'ÉLECTRODE

(30) Priorität: 14.05.2021 DE 102021112548
(43) Veröffentlichungstag der Anmeldung: 20.03.2024
(73) Patentinhaber: Bräuer Systemtechnik GmbH, 09456 Annaberg-Buchholz (DE)
(72) Erfinder: NITZ, Jens, 09465 Sehmatal-Sehma (DE); KÜTTNER, Robin, 09474 Crottendorf (DE); STOPP, Jens, 09427 Ehrenfriedersdorf (DE)
(74) Vertreter: Weidner Stern Jeschke
(86) Internationale Anmeldenummer: PCT/EP2022/061965
(87) Internationale Veröffentlichungsnummer: WO 2022/238195

(56) Entgegenhaltungen:
- EP-B1- 2 647 462
- DE-A1- 102014 209 828
- DE-C- 702 445
- DE-C- 817 231
- GB-A- 190 925 830
- US-B2- 6 971 283

## Beschreibung

Die Erfindung betrifft eine Einrichtung zum Abziehen der Elektrodenkappen von Elektrodenschäften im Widerstandspunkt-schweißverfahren.

Zum Verbinden von Metallblechen und Bändern wird häufig das Punkt-Schweißen angewandt.

Insbesondere in der Automobilindustrie wird dieses Verfahren in der Karosserieherstellung in automatisierten Fertigungsstraßen eingesetzt.

Üblicherweise werden hier eine Vielzahl von Schweißrobotern eingesetzt, um die Karosserieblechteile durch Punkt-Schweißen mit einander zu verbinden. Diese Schweißroboter sind mit Schweißzangen ausgestattet, deren Elektrodenschäfte mit je einer Punkt-Schweiß-Elektrode, den sogenannten Elektrodenkappen, ausgerüstet sind.

Diese Schweißzangen werden an die miteinander zu verschweißenden positionierten Bleche herangeführt. Die genaue Positionierung der Schweißzange zu den zu verschweißenden Blechen sowie die Anordnung der Bleche zueinander erfolgt heutzutage automatisiert und computergestützt.

In solch einer automatisierten Fertigungsstraße erfolgen die Schweißvorgänge in möglichst schneller Taktung und unterbrechungsfrei.

Hierdurch unterliegen insbesondere die Elektrodenkappen einem hohen Verschleiß, da die Kontaktflächen der Elektrodenkappen in Kontakt mit den jeweils zu verschweißenden Karosserieblechteilen treten. Bei diesem Schweißvorgang fließt Strom zwischen den Elektroden durch die zu verschweißenden und aneinander anliegenden Karosserieblechteile. Dabei tritt eine Veränderung an den Kontaktflächen der Elektrodenkappen in der Schweißeinflusszone der Elektrodenkappen auf.

Häufig bilden sich am Rand der Kontaktflächen Abbrandwülste, welche durch eine Vergrößerung der Kontaktfläche eine Veränderung der Schweißbedingungen bewirken.

Um dieser Veränderung nicht durch ein unökonomisches Nachführen der Stromstärke begegnen zu müssen, werden die Elektrodenkappen regelmäßig und in Abhängigkeit ihrer Belastung und daraus resultierender Abnutzung durch Fräsen nachbearbeitet.

Dazu werden Fräseinrichtungen so angeordnet, dass die Schweißroboter diese mit ihren Schweißzangen erreichen können und die Elektrodenkappen in Eingriff mit der jeweils installierten Fräseinrichtung gebracht werden.

Diese Elektrodenkappenfräseinrichtungen werden regelmäßig gebildet aus einem Werkzeugträger mit mindestens einem darin um eine Werkzeugdrehachse drehbar gelagerten Fräswerkzeug und einem Antrieb für dieses Fräswerkzeug.

Häufig werden zusammenwirkende Elektroden einer Schweißzange in gleichem oder ähnlichem Maße verschleißen, so dass diese regelmäßig und gleichzeitig durch Fräsen nachbearbeitet werden müssen.

Nach einer Anzahl durchgeführter Nachbearbeitungen ist ein Materialabtrag von der Elektrodenkappe in solch einem Maße erfolgt, dass diese ausgetauscht werden müssen.

Dazu werden die verschlissenen Elektrodenkappen von den Elektrodenschäften abgezogen.

Beim Abziehen der Elektrodenkappen von den Schweißelektrodenschäften werden die Elektrodenkappen an ihren zylindrischen Mantelflächen mittels Klemmbacken festgeklemmt. Dann wird die Elektrodenkappe um ihre Achse bzw. die des verdrehsicher gehaltenen Schweißelektrodenschaftes gedreht und in dessen Achsrichtung von diesem Schweißelektrodenschaft abgezogen.

Hierzu sind Handabzieher bekannt, welche jedoch in automatisierten Fertigungsstraßen wegen der Gefährdung der Arbeitskräfte nicht einzusetzen sind.

Vorrichtungen zum Abziehen von Elektrodenkappen sind beispielsweise aus der DE20209401 bekannt.

Diese beschreibt eine Vorrichtung zum Abziehen von Elektrodenkappen, bei der die Elektrodenkappe auf einem Elektrodenschaft mit geringem Abstand zu einem Anlaufbund des Elektrodenschaftes sitzt. Dabei entsteht zwischen dem Anlaufbund und dem anlaufbundseitigen Ende der Elektrodenkappe ein umlaufender, nutenförmiger Freiraum in welchen tangential in Richtung der Breite des Freiraumes dicker werdenden Keil eingreift.

Aus der DE8808586 ist eine Vorrichtung bekannt, bei welcher mittels einer Hebelkonstruktion die Elektrodenkappen von den Elektrodenkappenschäften abgezogen werden.

Auch bekannt sind Abzieheinrichtungen, welche in einem Werkzeugträger angeordnet sind. Diese Abzieheinrichtungen weisen ein um eine Werkzeugdrehachse drehbar gelagertes Abziehwerkzeug und einen Antrieb für dieses Abziehwerkzeug auf.

Die Elektrodenkappen werden von in dem Abziehwerkzeug angeordneten Klemmbacken fixiert. Dann wird die Elektrodenkappe um ihre Achse bzw. die des verdrehsicher gehaltenen Schweißelektrodenschaftes gedreht und in dessen Achsrichtung von dem Schweißelektrodenschaft abgezogen.

Das DE-Patent 817231 beschreibt ein Drehbankfutter mit Spannbacken für Feinstbearbeitung, welches einen auf die Spannbacken (4) in Achsrichtung des Futters satt aufschiebbaren und diese rahmenartig umfassenden Backenschoner (I) für Schrupparbeiten, der an einem Rahmenschenkel eine Spannfläche für das Werkstück und an dem gegenüberliegenden Schenkel eine Schraube (3) zum Befestigen des Backenschoners (1) an den Spannbacken (4) aufweist.

In der deutschen Offenlegungsschrift DE 10 2014 209 828 A1, welche die Basis für den Oberbegriff von Anspruch 1 bildet, wird ein Abziehwerkzeug zum Abziehen von Elektrodenkappen von Kappenträgern von Punktschweißelektroden vorgeschlagen, welches einen im Abziehbetrieb um eine Drehachse (A) drehbaren Werkzeugkörper (24) mit einer zur Elektrodenkappenaufnahme in Richtung der Drehachse (A) offenen Elektrodenkappenaufnahmeöffnung (56) und zwei Sätze von Klemmbacken zum Klemmeingriff umfasst.

Die EP 2 647 462 B1beschreibt einen Schweißelektrodenwechsler, bei dem eine Entnahmestation (12) für gebrauchte Elektroden außerhalb der Arme (11) einer Schweißzange zwei Kufen (48,50) umfasst, wird in der EP 2 647 462 B1 vorgeschlagen.

Diese Kufen weisen jeweils eine Kontaktfläche (64) auf, die den anderen Kufen gegenüberliegend angeordnet sind. Als Antriebsmittel der Kufen sind Zahnstangenwellen vorgesehen.

Das US Patent US 6,971,283 B2 beschreibt eine Greifanordnung, bei welcher die Zähne in mindestens zwei im Wesentlichen Reihen angeordnet sind, wobei mindestens eine Reihe der Zähne in Längsrichtung gegenüber einer unmittelbar benachbarten Zahnreihe
der Zähne versetzt ist.

Das britische Patent GB 25830 schlägt vor, in Backen von Spannfuttern die Greifflächen mit definiten Verzahnungen auszustatten.

Eine weitere bekannte Lösung besteht darin, dass nicht die Elektrodenkappe vom Elektrodenschaft gezogen wird, sondern der Elektrodenschaft durch Öffnen der Schweißzange aus der rotierenden Kappe gezogen wird.

Auch bei diesen Vorrichtungen wird die Kappe mittels Klemmbacken fixiert und dabei um ihre Achse bzw. die des verdrehsicher gehaltenen Schweißelektrodenschaftes gedreht und der Elektrodenschaft wird bei Öffnen der Zange aus der Elektrodenkappe gezogen.

Aus der DE 10 2014 209 828 A1 ist ein Abziehwerkzeug zum Abziehen von Elektrodenkappen von Kappenträgern von Punktschweißelektroden bekannt, umfassend einen im Abziehbetrieb um eine Drehachse (A) drehbaren Werkzeugkörper (24) mit einer zur Elektrodenkappenaufnahme in Richtung der Drehachse (A) offenen Elektrodenkappenaufnahmeöffnung (56), einen ersten Satz (26) von Klemmbacken zum Klemmeingriff mit einer in der Elektrodenkappenaufnahmeöffnung (56) positionierten Elektrodenkappe (20) wenigstens bei Drehung des Werkzeugkörpers (24) um die Drehachse (A) in einer ersten Drehrichtung (R1), einen zweiten Satz (28) von Klemmbacken zum Klemmeingriff mit einer in der Elektrodenkappenaufnahmeöffnung (56) positionierten Elektrodenkappe (22) wenigstens bei Drehung des Werkzeugkörpers (24) um die Drehachse (A) in einer der ersten Drehrichtung (R1) entgegengesetzten zweiten Drehrichtung (R2).

Die bekannten Wechselkopf-Typen gemäß dem bekannten Stand der Technik sind vorrangig entweder mit gerade-verzahnten Backen oder schräg-verzahnten Backen ausgestattet.

Regelmäßig verwendet werden hierbei drei Backen. Diese Bauweise hat den Vorteil, dass zu fixierende Werkzeuge oder Werkstücke sich gut zentrieren lassen.

Nachteilig bei der Variante mit ausschließlich gerade-verzahnten Backen ist jedoch, dass beim Lösen der Elektrodenkappen vom Zangenschaft keine oder nur eine geringe Fixierung gegen eine axiale Bewegung stattfindet. Damit kann es zum vorzeitigen unkontrollierten Verlust der Elektrodenkappen nach dem Abziehvorgang kommen.

Bei der weiterentwickelten Wechselkopf-Variante mit ausschließlich schräg-verzahnten Backen tritt dieses Problem nicht auf.

Die Schräg-Verzahnung sorgt dafür, dass die Zangenschäfte beim Lösen der Elektrodenkappen durch Gewindeeffekt geschont werden, da beim Einschneiden ins Grundmaterial die Kappe durch die schräge Anstellung der Verzahnung in eine axiale Richtung und damit weg vom Elektrodenschaft gedrängt wird. Da die Elektrodenkappe während des Wechselkopfdrehens schnell von ihrem Sitz wegbewegt wird, tritt somit weniger / kürzere Reibung zwischen den Kontaktflächen des Elektrodenkappenkonus und zugehörigem Schaft auf und es findet somit eine Fixierung der Elektrodenkappen gegen eine axiale Bewegung statt.

Damit wird die gelöste Elektrodenkappe sicher gehalten. Nachteilig ist jedoch, dass der erforderliche Drehwinkel für den zweiteiligen Prozess, bestehend aus Einschneiden bis Greifen der Elektrodenkappe und Einleiten einer Drehbewegung, sich dadurch vergrößert und sich der effektiv ergebende Drehwinkel in der "Lösen-Phase" verringert.

Der Erfindung liegt die Aufgabe zugrunde, eine Abzieheinrichtung der vorstehenden Art so auszugestalten, dass die Schwierigkeiten bisher bekannter Lösungen möglichst vermieden werden und insbesondere zu erreichen, dass die Prozesssicherheit gewährleistet wird.

Erfindungsgemäß wird diese Aufgabe durch eine Vorrichtung und durch die Verwendung der Vorrichtung gemäß der Patentansprüche 1 und 2 gelöst.

Nachfolgend soll die erfindungsgemäße Einrichtung anhand der Abbildungen und dem nachfolgenden Ausführungsbeispiel näher erläutert werden.

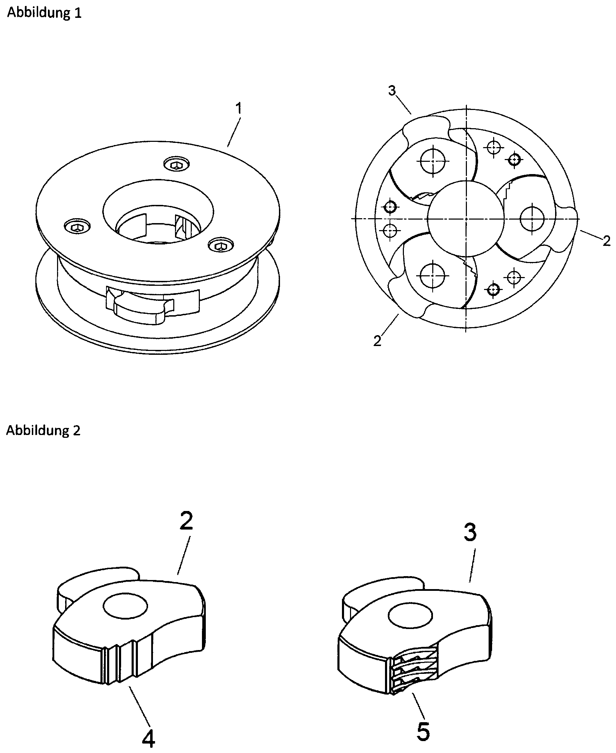

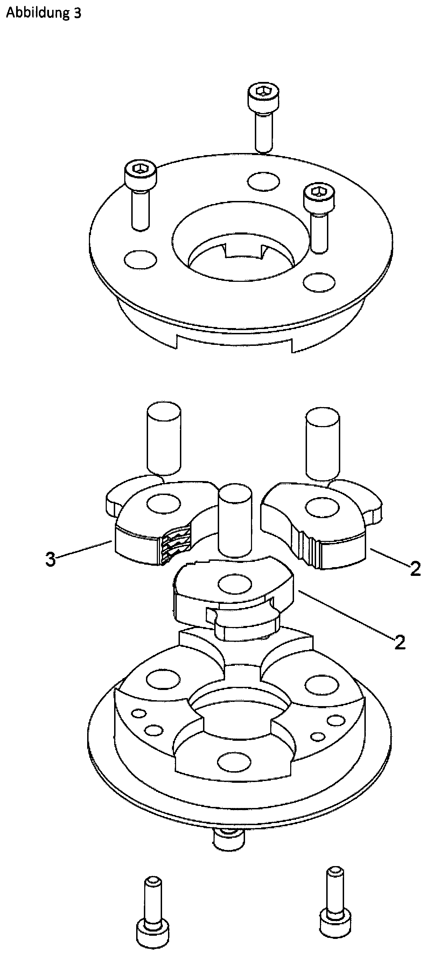

Dabei zeigt
Abbildung 1
   die erfindungsgemäße Abzieheinrichtung 1 in montiertem, einsatzfähigem Zustand in Perspektive als auch geschnittener Draufsicht
Abbildung 2
   die verwendeten und miteinander zu kombinierenden Klemmmittel 2 und 3 mit Gerade-Verzahnung 4 sowie mit Schräg-Verzahnung 5.
   sowie Abbildung 3 eine Sprengzeichnung der Abzieheinrichtung 1.

Die erfindungsgemäße Elektrodenkappenabzieheinrichtung besteht aus mindestens einer um eine Werkzeugdrehachse drehbar gelagerten Abzieheinrichtung 1 mit Klemmmitteln 2 und 3 zum Fixieren der abzuziehenden Elektrodenkappen.

Dabei weist die erfindungsgemäße Elektrodenkappenabzieheinrichtung eine Kombination aus gerade-verzahnten und schräg-verzahnten Klemmmitteln 2 und 3 auf, wobei die schräg-verzahnten Klemmmittel eine schräge Anstellung der Verzahnung in axialer Richtung aufweisen.

Bei erfindungsgemäßer Verwendung einer Mischbestückung mit mindestens einem gerade-verzahnten Klemmmittel 2 unterstützt diese ein früheres Einleiten der Drehbewegung auf die zu lösende Elektrodenkappe.

Der Einsatz wenigstens eines schräg-verzahnten Klemmmittels 3 gewährleistet einen ausreichenden Formschluss durch Einschneiden in das Kupfermaterial und so eine Sicherung gegen unkontrolliertes Lösen/Verlust der gelösten Kappe.

Die Kombination der Verzahnungstypen ermöglicht damit ein prozesssicheres Lösen, Halten und Ablegen der Elektrodenkappen am gewünschten Ort.

In einer besonderen Ausgestaltung der erfindungsgemäßen Lösung ist es möglich, diese Klemmmittel so auszuwählen, dass die Mehrzahl der eingesetzten Klemmmittel die Klemmmittel 2 oder wahlweise die Klemmmittel 3 sind.

Als besonders vorteilhaft bei der Verwendung der erfindungsgemäßen Lösung ist hervorzuheben, dass diese auch bei bereits im Einsatz befindlichen Abzieheinrichtungen Anwendung finden kann.

Hier können bisher eingesetzte gleiche Klemmmittel so variiert werden, dass mindestens ein Klemmmittel gegen ein Klemmmittel der anderen Ausführungsform ausgetauscht wird.

## Patentansprüche

1. Einrichtung zum Abziehen der Elektrodenkappen von Elektrodenschäften, bestehend aus mindestens einer um eine Werkzeugdrehachse drehbar gelagerten Abzieheinrichtung (1) mit Klemmmitteln (2 und 3) zum Fixieren der abzuziehenden Elektrodenkappen, **dadurch gekennzeichnet, dass** sie eine Kombination aus gerade-verzahnten und schräg-verzahnten Klemmmitteln (2 und 3) aufweist, wobei die schräg-verzahnten Klemmmittel eine schräge Anstellung der Verzahnung in axialer Richtung aufweisen.

2. Verwendung der Vorrichtung aus Anspruch 1 zum Abziehen von Elektrodenkappen von Elektrodenschäften.

## Claims

1. System for removing the electrode caps from electrode shafts, consisting of at least one removing device (1) mounted rotatably about a tool rotary axis and having clamping means (2 and 3) for fixing the electrode shafts to be removed, **characterized in that** it comprises a combination of straight-toothed and helical-toothed clamping means (2 and 3), wherein the helical-toothed clamping means have an oblique tooth inclination in the axial direction.

2. Use of the device of claim 1 for removing electrode caps from electrode shafts.

## Revendications

1. Dispositif de retrait des capuchons d'électrode de tiges d'électrode, constitué d'au moins un dispositif de retrait (1) monté de manière à pouvoir tourner autour d'un axe de rotation d'outil avec des moyens de serrage (2 et 3) pour fixer les capuchons d'électrode à retirer, **caractérisé en ce qu'**il présente une combinaison de moyens de serrage (2 et 3) à denture droite et à denture hélicoïdale, dans lequel les moyens de serrage à denture hélicoïdale présentent un placement oblique de la denture dans une direction axiale.

2. Utilisation du dispositif selon la revendication 1 pour retirer des capuchons d'électrode de tiges d'électrode.
